# EUROPÄISCHE PATENTANMELDUNG

(11) **EP 3 716 537 A1**
(43) Veröffentlichungstag der Anmeldung: **30.09.2020**
(21) Anmeldenummer: 19164886.4
(22) Anmeldetag: 25.03.2019
(51) Int. Cl.: H04L 12/40, G05B 19/418, H04L 12/721, H04L 12/701

(54) **VERFAHREN ZUR DATENKOMMUNIKATION, NETZWERKKNOTEN, COMPUTERPROGRAMM UND COMPUTERLESBARES MEDIUM**

(71) Anmelder: Siemens Aktiengesellschaft, 80333 München (DE)
(72) Erfinder: Obradovic, Dragan, 85521 Ottobrunn (DE); Steindl, Günter, 92284 Poppenricht (DE)

(57) **Zusammenfassung**

Die Erfindung betrifft ein Verfahren zur Datenkommunikation in einem insbesondere industriellen Netzwerk mit mehreren Netzwerkknoten (1), bei dem zwischen Kommunikationspartnern (2) über geschützte Verbindungen Datenpakete (P1-P3) zu übertragen sind, wobei die Datenpakete (P1-P3) von wenigstens zwei verschiedenen sendenden Kommunikationspartnern (2), Sendern, stammen und wobei sich von wenigstens zwei Sendern (2) die Sendefrequenzen, mit denen sie Datenpakete (P1-P3), die jeweils über eine geschützte Verbindung zu übertragen sind, senden, voneinander unterscheiden, wobei die Sendefrequenzen und/oder diese repräsentierende Größen bei dem Finden eines Pfades für die Übertragung der Datenpakete (P1-P3) wenigstens einer geschützten Verbindung berücksichtigt werden. Darüber hinaus betrifft die Erfindung einen Netzwerkknoten (1), ein Computerprogramm und ein computerlesbares Medium.

## Beschreibung

Die Erfindung betrifft ein Verfahren zur Datenkommunikation in einem insbesondere industriellen Netzwerk mit mehreren Netzwerkknoten, bei dem zwischen Kommunikationspartnern über geschützte Verbindungen Datenpakete zu übertragen sind, wobei die Datenpakete von wenigstens zwei verschiedenen sendenden Kommunikationspartnern, Sendern, stammen und wobei sich von wenigstens zwei Sendern die Sendefrequenzen, mit denen sie Datenpakete, die jeweils über eine geschützte Verbindung zu übertragen sind, senden, voneinander unterscheiden. Darüber hinaus betrifft die Erfindung einen Netzwerkknoten, ein Computerprogramm und ein computerlesbares Medium.

In industriellen Automatisierungssystemen sind in der Regel eine Vielzahl von Komponenten, etwa eine oder mehrere Steuerungen, verteilte IO-Geräte, die Sensoren und/oder Aktoren umfassen oder durch solche gebildet werden, Peripheriegeräte etc. miteinander kommunikativ über ein Netzwerk verbunden. In diesem kann die Kommunikation beispielsweise gemäß dem unter der Bezeichnung PFOFINET bekannten Kommunikationsprotokoll abgewickelt werden. PROFINET (process field network) ist der offene Industrial-Ethernet-Standard der PROFIBUS-Nutzerorganisation e. V. (PNO) für die Automatisierung.

Der Datenaustausch zwischen der oder den Steuerung(en), insbesondere IO-Controller(n) und den verteilten IO-Geräten erfolgt in der Regel über eine zyklische Kommunikation, wobei Datenpakete zyklisch insbesondere in Echtzeit übertragen werden. Für eine solche Kommunikation wird die kontinuierliche Zeit in aufeinanderfolgende zyklische Zeitabschnitte gleicher Dauer zerlegt, so dass die natürliche kontinuierliche Zeit diskretisiert wird. Die sich aufgrund dieser Zerlegung ergebenden Zeitsegmente werden im Folgenden als Sendetakte oder auch Netzwerktakte (Send Clocks) bzw. Sendetaktzeit oder auch Netzwerktaktzeit (Send Clock Time) bezeichnet. Der Sendetakt bzw. die Sendetaktzeit werden üblicherweise im Rahmen der Konfiguration, insbesondere vom Benutzer definiert.

Insbesondere für den Fall, dass Pakete verschiedener Sender nicht mit der gleichen Rate generiert werden, kann eine Untersetzung (Reduction Ratio) konfiguriert werden. Die Untersetzung gibt an, wie oft die zyklischen IO-Nachrichten ausgetauscht werden. Es ist insbesondere das ganzzahlige Vielfache des Sendetaktes (Send Clocks), das der (jeweilige) Sender für das Senden von Paketen nutzt.

Eine Untersetzung/Reduction Ratio von 1 bedeutet, dass IO-Nachrichten in jedem Sendetakt gesendet werden. Eine Reduction Ratio von 16 beispielswiese, dass nur alle 16 Sendetakte gesendet wird. Wenn beispielsweise der Sendetakt auf 250 Mikrosekunden festgelegt ist, ein Kommunikationspartner jedoch nur jede Millisekunde neue Daten generiert, wird zweckmäßiger Weise eine Untersetzung von 4 gewählt.

Jedes konfigurierte IO-Gerät kann eine eigene Untersetzung, also eine eigene Reduction Ratio RR haben. Die von einem bestimmten IO-Gerät unterstützten Reduction Ratios sind zweckmäßiger Weise ebenfalls in einer Konfigurationsdatei aufgeführt. Es können insbesondere Untersetzung zwischen 1 und 16.384 möglich sein.

Durch die Untersetzung ergeben sich je Zyklus mehrere Sendetakte, die zum Senden genutzt werden können. Für eine Untersetzung von 8 beispielsweise können unter Einhaltung der Untersetzung "jeden achten Sendetakt" eines Zyklus, acht mögliche Takte als Startpunkt verwendet werden. Diese werden üblicherweise als Phasen bezeichnet und nummeriert. Jede Sendetaktzeit bzw. jede Sendetaktzeitspanne repräsentiert mit anderen Worten eine Phase. Für das Beispiel einer Untersetzung von 8 ergeben sich insgesamt acht Phasen je Sendezyklus. Werden diese durchnummeriert, erhält man entsprechende Phase 1, Phase 2, ..., Phase 8.

Die Zeitdauer eines Sendetaktes/einer Phase kann aus dem Send Clock Factor (Sendetaktfaktor) berechnet werden. Der Wert kann üblicher Weise zwischen 1 und 128 liegen und definiert die Zeitspanne für einen Sendetakt und somit eine Phase im Zeitplan. Der Sendetaktfaktor ist diejenige Anzahl von in der Regel 31,25 Mikrosekunden (Basiszeiteinheit insbesondere für den PROFINET-Zeitplan) langen Schritten, die eine Phase bzw. einen Sendetakt bilden. Es gilt entsprechend PH = SCF x 31,25 Mikrosekunden bzw. SC = SCF x 31,25 Mikrosekunden mit der Phase PH bzw. dem Sendetakt (Send Clock) SC und dem Sendetaktfaktor (Send Clock Factor) SCF. Die von einem bestimmten IO-Gerät unterstützten Sendetaktfaktoren sind zweckmäßiger Weise in einer Konfigurationsdatei aufgeführt. Die PROFINET-Spezifikation verlangt in der Regel, dass alle Geräte einen Sendetaktfaktor von 32 unterstützen, was einem Sendetakt bzw. einer Sendetaktzeit von 1 Millisekunde entspricht (32 x 31,25 Mikrosekunden = 1 Millisekunde). Alle anderen Sendetaktfaktoren sind optional.

Die Länge des zwischen dem jeweiligen Controller und IO-Device genutzten Update- bzw. Sendezyklus kann erhalten werden, indem das Produkt aus der Untersetzung RR, dem Sendetaktfaktor SCF und der Basiszeiteinheit von 31,25 Mikrosekunden gebildet wird, also SZ = RR x SCF x 31,25 Mikrosekunden. Der maximale Sende- bzw. Updatezyklus/die maximale Aktualisierungszeit, innerhalb dem bzw. der jeder sendende Kommunikationspartner wenigstens einmal gesendet hat, kann erhalten werden, indem die maximale Untersetzung RRₘₐₓ eingesetzt wird. Für das Beispiel einer maximalen Untersetzung von 8 und einem Sendetaktfaktor von 32 würde sich ein (maximaler) Sendezyklus von 8 ms ergeben, indem alle Sender zumindest einmal gesendet haben.

Eine entsprechende zyklische Datenkommunikation in einem Automatisierungssystem ist beispielsweise in dem Buch "Automating with PROFINET - Industrial Communication based on Industrial Ethernet" von Raimond Pigan, Second Edition, 2008, ISBN 978-3-89578-294-7 beschrieben. Auch in der ebenfalls auf die Anmelderin zurückgehenden EP 2 759 896 A1 zurückgehenden ist eine solche offenbart.

Der Sendetakt (Send Clock) und die Untersetzung (Reduction Ratio) zusammen mit dem zeitrichtigen Einspeisen der Pakete durch die Geräte sind praktisch das Herzstück des PROFINET Scheduling Modells.

In der IEEE sind durch die Erweiterungen der Arbeitsgruppe TSN (Time-Sensitive Networking) periodische bzw. zyklische Übertragungen, so genannte Streams, im Netzwerk besonders geschützt. Die TSN-Arbeitsgruppe (Time Sensitive Networking Taskgroup) ist dabei eine Nachfolgegruppe der AVB-Arbeitsgruppe (Audio/Video Bridging Taskgroup). Zu TSN gehört eine Vielzahl von Standards, rein beispielhaft sei in diesem Zusammenhang genannt Zeitsynchronisation (IEEE 802.1 AS-REV), Framepreemption (IEEE 802.1 Q-2018) und Reservierung (IEEE 802.1 Q-2018, IEEE 802.1 Qcc). Bekannt ist auch das Stream Reservation Protocol (SRP, siehe IEEE 802.1 Q-2018), mit dem Übertragungsressourcen dynamisch reserviert werden können und es möglich wird, Latenzzeiten zu garantieren. Durch eine automatische Konfiguration von SRP kann für Streams mit einer erfolgreichen Reservierung insbesondere eine gesicherte Übertragung innerhalb einer bestimmten maximalen Latenz garantiert werden.

Ein Sender wird im Rahmen von AVB bzw. TSN auch als Talker und ein Empfänger als Listener bezeichnet.

Der Einsatz von standardisierten AVB- bzw. TSN-Mechanismen erfordert eine Adaption der Systeme. Insbesondere bei der Erweiterung von PROFINET um TSN stellt sich die Frage der Abbildung des bisherigen Netznutzungsmodells.

Während zeitrichtiges Einspeisen und Send Clock im IEEE 802.1 Q Modell enthalten sind, gilt dies für die Untersetzung/Reduction Ratio nicht. Daher lassen sich die existierenden Applikationen/Use-Cases nicht auf TSN abbilden, auch nicht bei höherer Link Speed, beispielsweise einem Übergang von den heute üblichen 100 Mbit/s zu 1Gbit/s oder höher.

Aus dem Stand der Technik weiterhin vorbekannt ist das "Intermediate System to Intermediate System Protocol" (IS-IS-Protocol) gemäß ISO/IEC 10589:2002. Bei diesem handelt es sich um Routing- bzw. Interior-Gateway-Protokoll (IGP), über das Routing-Informationen zwischen "Intermediate Stations (IS)", die etwa in Form von Netzwerkknoten (z.B. Bridges) bzw. Gateways gegeben sein können, ausgetauscht werden können. Dabei ist insbesondere vorgesehen, dass Intermediate Stations Informationen jeweils zumindest über ihre direkten Nachbarn aussenden und jede Station auf Basis der von anderen Stations empfangenen Nachrichten und den Informationen über ihre Nachbarn ein "Wissen über die Topologie" erhält. Es kann beispielsweise eine Datenbank oder Liste mit Topologie-Informationen, insbesondere Pfadinformationen aufgebaut werden. Mit dem IS-IS-Protokoll lässt sich entsprechend die Topologie eines gegebenen Netzwerkes dezentral erfassen.

Die Topologie kann dann als Grundlage für die Bildung von Bäumen (Trees - IEEE-Ausdruck logische und/oder aktive Topologie) durch weitere Algorithmen wie beispielsweise Dijkstra oder GADAG (A Genetic Algorithm for Learning Directed Acyclic Graphs) dienen.

Auf Basis der Bäume/Trees kann beispielswiese mit Hilfe von "MRP Based Stream Reservation" (MRP steht für das Multiple Registration Protocol siehe IEEE Protocol) - insbesondere mit Erweiterungen bei MRP - oder neueren "LRP" Verfahren (LRP steht für das Link-local Registration Protocol, siehe IEEE Protocol) ein Pfad etabliert werden. Es kann auch ein Reservierungsprotokoll, beispielsweise RAP (Ressource Allocation Protocol) durch Erweiterungen an die Bäume/Trees angebunden werden.

Es ist eine Aufgabe der vorliegenden Erfindung, ein Verfahren der eingangs genannten Art derart weiterzuentwickeln, dass sich mit diesem mehr insbesondere bereits existierende industrielle Use-Cases/Applikationen auch in AVB-/TSN-fähigen Netzwerken realisieren lassen. Darüber hinaus ist es eine Aufgabe der vorliegenden Erfindung einen Netzwerkknoten anzugeben, mit welchem sich ein solches Verfahren durchführen lässt.

Die erstgenannte Aufgabe wird bei einem Verfahren der eingangs genannten Art dadurch gelöst, dass die Sendefrequenzen und/oder diese repräsentierende Größen bei dem Finden eines Pfades für die Übertragung der Datenpakete wenigstens einer geschützten Verbindung berücksichtigt werden.

Zweckmäßiger Weise wird in an sich vorbekannter Weise ein Pfad gesucht, entlang dem die beteiligten Netzwerkknoten bzw. deren Ports in Senderichtung zu der einzurichtenden geschützten Verbindung gehörige Anforderungen, wie eine insbesondere maximale Latenz und/oder ausreichende Bandbreite, erfüllen.

Durch die erfindungsgemäße Berücksichtigung der Sendefrequenz, ggf. über eine diese repräsentierende Größe, bei der Pfad-Findung kann mit deutlich mehr verfügbaren Pfaden und somit deutlich mehr geschützten Verbindungen, etwa TSN-Streams in einem Netzwerk gearbeitet werden, die Effizienz wird folglich deutlich erhöht. Damit lassen sich wesentlich mehr heute bekannte Anforderungen und Anwendungen auf AVB bzw. TSN abbilden.

Ein Beispiel einer geschützten Verbindung ist ein Stream, wie er von der Audio/Video Bridging (AVB) Task Group und insbesondere von der Time-Sensitive Networking (TSN) Task Group in der internationalen Norm IEEE 802.1 festgelegt ist. Für eine geschützte Verbindung sind bzw. werden zweckmäßiger Weise in aus dem Stand der Technik vorbekannter Weise Ressourcen an den beteiligten Netzwerkknoten zu reservieren. Eine geschützte Verbindung zeichnet sich insbesondere durch einen dieser zugeordneten eindeutigen Kenner, insbesondere einen Stream-Kenner bevorzugt in Form einer Stream-ID aus.

Es kann sein, dass für eine geschützte Verbindung nur ein Pfad zu finden ist. Selbstverständlich ist es auch möglich, dass mehr als ein Pfad gesucht wird, beispielswiese, um eine besonders ausfallsichere, redundante Kommunikation etwa über zwei redundante Pfade zu ermöglichen.

Zweckmäßiger Weise werden die Sendefrequenzen und/oder diese repräsentierende Größen bereits eingerichteter und insbesondere bereits genutzter geschützter Verbindungen bei dem Finden wenigstens eines Pfades für wenigstens eine weitere, insbesondere noch einzurichtende geschützte Verbindung berücksichtigt. Die Berücksichtigung kann im Rahmen der Einrichtung der wenigstens einen weiteren geschützten Verbindung erfolgen.

Bevorzugt ist und/oder wird die Zeit für die Datenkommunikation in aufeinanderfolgende zyklische Zeitabschnitte gleicher Dauer, Sendetakte, zerlegt.

Die Sendefrequenzen oder die diese repräsentierenden Größen können insbesondere in Form von Untersetzungen gegeben sein und bei der Pfadfindung berücksichtigt werden.

Eine Untersetzung ist insbesondere, wie aus dem Stand der Technik vorbekannt, jeweils durch eine ganze Zahl gegeben, welche angibt, jeden wievielten Sendetakt ein Paket gesendet wird. Eine Untersetzung von 2, 3, 4 oder 8 beispielswiese bedeutet, dass Datenpakete nicht in jedem der aufeinanderfolgenden Sendetakte gesendet werden sondern nur in jedem zweiten, dritten, vierten oder achten Sendetakt. Eine Untersetzung von 1 bedeutet, dass in jedem Sendetakt ein Paket gesendet wird.

Die Sendetakte werden besonders bevorzugt durchnummeriert, wobei die Nummerierung insbesondere derart ist, dass mit eins begonnen und bis zu einer maximalen, insbesondere der maximale Untersetzung entsprechenden Nummer hochgezählt wird, und insbesondere in einem nächsten Zyklus für den dem Sendetakt höchster Nummer insbesondere aus dem vorangegangenen Zyklus folgenden Sendetakt jeweils wieder mit eins begonnen wird.

Zweckmäßiger Weise beginnt die Durchnummerierung in jedem Zyklus mit eins, steigt jeweils bis auf die insbesondere maximale Untersetzung an und beginnt dann im folgenden Zyklus wieder mit eins und so weiter. Für eine Untersetzung von vier beispielsweise würden sich Sendetakt 1, Sendetakt 2, Sendetakt 3 und Sendetakt 4 in einem Zyklus ergeben, dem dann Sendetakt 1, usw. des nächsten Zyklus folgt. Werden die gezählten bzw. durchnummerierten Sendetakte als Phasen bezeichnet, erhält man entsprechend Phase 1, Phase 2, Phase 3, Phase 4, Phase 1 usw.

Weiterhin bevorzugt werden diejenigen Sendetakte, insbesondere diejenigen Phasen bei der Pfadfindung berücksichtigt, in welchen die Datenpakete zyklisch gesendet werden. Sind die Sendetakte/Phasen nummeriert, wird bevorzugt die Nummer desjenigen Sendetaktes (derjenigen Phase) berücksichtigt, in welchem (welcher) die Datenpakete zyklisch (in jedem Zyklus) gesendet werden, berücksichtigt. Beispielsweise kann für eine gegebene Untersetzung, etwa ein eine Untersetzung 4 zusätzlich berücksichtigt werden, dass in Sendetakt bzw. Phase 3 gesendet wird. Das bedeutet, Pakete werden nicht in jedem Sendetakt sondern nur alle vier Sendetakte gesendet, wobei jeweils in dem dritten Sendetakt/der dritten Phase (Sendetakt/Phase 3) eines Zyklus gesendet wird. Dass eine Übertragung durch eine Untersetzung und einen Start-Sendetakt bzw. eine Start-Phasennummer im Zyklus charakterisiert wird, ist aus dem Stand der Technik, insbesondere im Zusammenhang mit PROFINET vorbekannt und hat sich bewährt. Es sei angemerkt, dass für die maximal mögliche Sendefrequenz, die einem Senden von Paketen in jedem Sendetakt entspricht (entspricht der minimalen Untersetzung von 1), kein Start-Sendetakt bzw. keine Start-Phase angegeben werden muss bzw. kann. Diejenigen Sendetakte, insbesondere diejenigen Phase, in welchen die Datenpakete der jeweiligen geschützten Verbindung zyklisch gesendet werden, werden daher zweckmäßiger Weise nur für diejenigen Sender angegeben, die mit einer Untersetzung größer 1, also nicht in jedem Sendetakt senden.

Die Berücksichtigung der Sendefrequenzen und/oder der diese repräsentierenden Größen schließt bevorzugt ein, dass die resultierende Auslastung an den Ports beteiligter Netzwerkknoten ermittelt und diese bei der Pfadfindung berücksichtigt wird.

In weiterer besonders bevorzugter Ausgestaltung wird die Auslastung an Ports zumindest derjenigen Netzwerkknoten, die an geschützten Verbindungen beteiligt sind, in den verschiedenen Sendetakten, insbesondere Phasen bei der Pfadfindung berücksichtigt. So wird es insbesondere möglich, Wege bzw. Pfade, die für eine bestimmte Untersetzung bzw. Phase nicht mehr zur Verfügung stehen, unberücksichtigt zu lassen. Bevorzugt wird für wenigstens eine geschützte Verbindung ein Pfad unter Berücksichtigung der Auslastung der Ports in den verschiedenen aufeinanderfolgenden Sendetakten, insbesondere Phasen ermittelt. Zweckmäßiger Weise werden die Ports in Senderichtung betrachtet bzw. berücksichtigt. Alternativ zur Auslastung der Ports kann man auch von der Belegung der Ports sprechen.

Ferner wird zweckmäßiger Weise die Auslastung/Belegung aufgrund bereits bestehender, eingerichteter geschützter Verbindungen betrachtet bzw. ermittelt und berücksichtigt.

In einem Sendetakt/einer Phase steht in der Regel ein bestimmter Anteil für geschützte Verbindungen, insbesondere Streams zur Verfügung. Beispielseise können 20% jedes Sendetaktes/jeder Phase für geschützte Verbindungen zur Verfügung stehen. Von einem 1 Millisekunde langen Sendetakt z.B. die insbesondere ersten 200 Mikrosekunden. Bei 1 Gbit/s würde dies ca. 25 kByte Daten entdsprechen. Unter der Auslastung eines Sendetaltes/einer Phase ist zu verstehen, wieviel des für geschützte Verbindungen vorgesehenen/zur Verfügung stehenden Anteils belegt ist bzw. genutzt wird. Bei dem genannten Beispiel also, wieviel der 200 Mikrosenkunden bereits durch geschützte Verbindungen belegt sind.

Damit die Auslastung/Belegung in den verschiedenen Sendetakten, insbesondere Phasen Berücksichtigung finden kann, wird die entsprechende Information zweckmäßiger Weise bereitgestellt, was beispielsweise durch die beteiligten Netzwerkknoten selber erfolgen kann. Die Information kann an eine zentrale Stelle übermittelt werden, an der eine Pfadberechnung bzw. Pfadfindung absolviert wird. Werden die Pfade zentral bearbeit, ist diese Information zu jeder Zeit verfügbar. Wird ein Verfahren wie z.B. IS-IS verwendet, so wird die Information über die dort definierte Funktionalität an alle Knoten verteilt. Im Prinzip ist sie damit wieder in jedem Knoten verfügbar.

Eine weitere vorteilhafte Ausgestaltung zeichnet sich dadurch aus, dass eine Datenbank geführt wird, in welcher Informationen über die Auslastung an den Ports in Senderichtung zumindest derjenigen Netzwerkknoten, die an geschützten Verbindungen beteiligt sind, in den verschiedenen Sendetakten, insbesondere Phasen hinterlegt sind und/oder werden. Eine entsprechende Datenbank kann beispielsweise zumindest von denjenigen Netzwerkknoten geführt werden, die an in dem Netzwerk eingerichteten geschützten Verbindungen beteiligt sind, bevorzugt von sämtlichen Netzwerkknoten des Netzwerkes. Dies stellt praktische ein dezentrales/verteiltes Modell bzw. eine dezentrale/verteilte Lösung dar. Alternativ oder zusätzlich ist es möglich, dass eine solche Datenbank an zentraler Stelle geführt wird, was dann einem zentralen Modell bzw. einer zentralen Lösung entspricht. Beide Varianten haben sich als geeignet erwiesen, wobei die dezentrale/verteilte Lösung den Vorteil bietet, dass auf eine zentrale Stelle, insbesondere zugehörige Hardware, verzichtet werden kann.

Bei der geführten Datenbank kann sich um eine IS-IS-Datenbank handeln, in welcher zusätzlich Informationen über die Auslastung an den Ports in Senderichtung zumindest derjenigen Netzwerkknoten, die an geschützten Verbindungen beteiligt sind, in den verschiedenen Sendetakten, insbesondere Phasen hinterlegt sind und/oder werden.

Es kann sein, dass zumindest diejenigen Netzwerkknoten, die an geschützten Verbindungen beteiligt sind, die Auslastung wenigstens eines ihrer Ports in Senderichtung in den verschiedenen Sendetakten, insbesondere Phasen bevorzugt wiederholt bekannt machen, insbesondere einem oder mehreren anderen Netzwerkknoten und/oder durch Versenden von Nachrichten entsprechenden Inhaltes.

Nachrichten mit den Informationen über die Auslastung der Ports in den verschiedenen Sendetakten/Phasen können beispielswiese im Rahmen eines Protokolls, insbesondere im Rahmen des IS-IS-Protokolls ausgetauscht werden, was sich als besonders geeignet erwiesen hat.

Bei dem IS-IS-Protokoll handelt es sich insbesondere um das "Intermediate System to Intermediate System Protocol" bevorzugt gemäß ISO/IEC 10589:2002(E). Dieses stellt ein besonders geeignetes Protokoll insbesondere zum Erstellen bzw. Erhalt von Topologie-Informationen dar.

Weitere Protokolle, beispielsweise Routing-Protokolle können ebenfalls zum Einsatz kommen. Rein beispielhaft sei als weiteres Protokoll, welches ebenfalls im Rahmen der vorliegenden Erfindung verwendet werden kann, OSPF (Open Shortest Path First) genannt (zu OSPF siehe beispielsweise den Request for Comments RFC 2328, https://tools.ietf.org/html/rfc2328).
Als ganz besonders vorteilhaft hat sich erwiesen, wenn für die verschiedenen Sendetakte, insbesondere Phasen jeweils ein Baum berechnet ist und/oder wird. Dann umfassen die Bäume weiter bevorzugt keine Pfade, für die gilt, dass wenigstens ein Port wenigstens eines beteiligten Netzwerkknotens in Senderichtung in den zu dem Baum gehörigen Sendetakten, insbesondere Phasen um ein vorgegebenes Maß oder vollständig ausgelastet ist. Beispielsweise kann für Sendetakt/Phase 1, Sendetakt/Phase 2, Sendetakt/Phase 3, usw. jeweils ein eigener Baum berechnet werden, der zweckmäßiger Weise keine Pfade enthält, in denen aufgrund zu hoher Auslastung in dem jeweiligen Sendetakt/der jeweiligen Phase keine weitere (geschützte) Datenübertragung in diesem Sendetakt/dieser Phase mehr möglich ist.

Bevorzugt wird jedes Mal, wenn ein Port für eine Phase wegen der Auslastung nicht mehr nutzbar ist, der zugehörige Baum/Tree aktualisiert. Dann stehen immer aktuelle Bäume/Trees zur Verfügung.

Wird die Sendetakt- bzw. Phasenbelegung berücksichtigt, insbesondere in eine Datenbank, etwa eine IS-IS-Datenbank mit aufgenommen und/oder mit allen beteiligten Netzwerkknoten ausgetauscht, kann mit Hilfe geeigneter Algorithmen, beispielsweise Dijkstra oder GADAG, für jede Untersetzung, sogar für jede Phase ein eigener Baum (Tree) generiert und auf Basis des Baumes ein Pfad gesucht und geprüft werden.

Werden die Informationen bereitgestellt und berücksichtigt, kann, sobald ein Pfad für eine bestimmte Untersetzung benötigt wird, ein Pfadalgorithmus dann den dazugehörigen Tree verwenden.

Werden die Sendefrequenzen berücksichtigt, wird insbesondere beispielsweise die IS-IS-Datenbank um die Informationen über die Auslastung der Ports der Knoten in den verschiedenen Sendetakten/Phasen erweitert, wird es auch möglich, auf ein weiteres Protokoll für die Pfadetablierung zu verzichten. Insbesondere ist kein weiteres Protokoll wie beispielsweise MRP oder LRP/RAP erforderlich, um einen Pfad zu etablieren. Es genügt, wenn ein Knoten den Pfad bei sich einträgt/registriert. Danach sorgt beispielsweise das IS-IS-Protokoll dafür, dass er in allen Datenbanken bzw. allen Teilen/Versionen einer auf mehreren Knoten verteilten Datenbank enthalten ist und damit genutzt werden kann.

Es kann dem (jeweiligen) Pfad folgend die Latenz in jedem Knoten aufaddiert werden. Wenn die gesamte Information beispielsweise in eine IS-IS-Datenbank integriert ist, kann jeder Knoten die gesamte Prüfung machen.

Es kann eine Zeitreferenz (Working Clock) herangezogen werden, die bei 0 startet. Teilt man den aktuellen Wert der Zeitreferenz/Working Clock durch den Sendetakt, erhält man bei Reminder=0 den Startzeitpunk des Sendetaktes. Teilt man ihn durch die Untersetzung, erhält man bei Reminder=0 den Start der Phase 1. "Working Clock" mod "Sendetakt" ergibt den Offset innerhalb der Phase. "Working Clock" div "Sendetakt" ergibt die Anzahl der Phase die seit "0" vergangen sind. Reminder := der Rest, der bei der Division bleibt. Ist dieser Rest "0", so zeigt der Working Clock gerade den Start der Phase, d.h. der Offset innerhalb der Phase ist "0". Da zweckmäßiger Weise alle Sender das gleiche Verständnis für die Phasenzuordnung/Phasennummerierung haben, kann ein solches Verfahren angewendet werden, um dies sicherzustellen.

Gegenstand der Erfindung ist auch ein Netzwerkknoten, der zur Durchführung des erfindungsgemäßen Verfahrens ausgebildet und/oder eingerichtet ist. Ein Netzwerkknoten, der auch als Netzelement bezeichnet werden kann, kann beispielsweise in Form einer Bridge oder eines Switches vorliegen. Der erfindungsgemäße Netzwerkknoten weist in bevorzugter Ausgestaltung zwei oder mehr Ports auf.

Der erfindungsgemäße Netzwerkknoten ist in bevorzugter Ausgestaltung ausgebildet und/oder eingerichtet, um zumindest für diejenigen seiner Ports, über die Datenpakete von eingerichteten geschützten Verbindungen weiterzuleiten sind, Informationen über die aufgrund eingerichteter geschützter Verbindungen bedingte Auslastung in verschiedenen Sendetakten, insbesondere Phasen bekannt zu machen.

Der erfindungsgemäße Netzwerkknoten hat sich als besonders geeignet für die Durchführung des erfindungsgemäßen Verfahrens erwiesen.

Das Netzwerk ist zweckmäßiger Weise Ethernet-fähig, es handelt sich insbesondere um ein Ethernet-basiertes Netzwerk. Insbesondere, damit geschützte Verbindungen, etwa Streams mit garantierter Dienstgüte (englisch: Quality of Service, QoS) unterstützt werden, ist das Netzwerk bzw. sind insbesondere zumindest die beteiligten Netzwerkknoten bevorzugt AVB- bzw. TSN-fähig, unterstützt bzw. unterstützen insbesondere die Einrichtung geschützter Verbindungen mit reservierten Netzwerkressourcen an den beteiligten Netzwerkknoten. Dies gilt entsprechend bevorzugt für den erfindungsgemäßen Netzwerkknoten.

AVB und TSN sind aus dem Stand der Technik hinlänglich vorbekannt. Für die Einrichtung bzw. Etablierung von geschützten Verbindungen, insbesondere Streams kommt bevorzugt ein Reservierungsprotokoll, beispielsweise SRP und/oder MSRP insbesondere gemäß IEEE 802.1 Q zum Einsatz. Der erfindungsgemäße Netzwerkknoten ist bevorzugt entsprechend ausgebildet und/oder eingerichtet.

Ein weiterer Gegenstand der vorliegenden Erfindung ist ein Computerprogramm, das Programmcodemittel zur Durchführung der Schritte des erfindungsgemäßen Verfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- FIG 1: ein Diagramm zur Veranschaulichung von Sendezyklus, Sendetakten und Untersetzung;
- FIG 2: ein Diagramm zur zyklischen Übertragung von Datenpaketen;
- FIG 3: den Echtzeit- und Best-Effort-Bereich eines Sendetaktes mit zugehörigen Füllständen;
- FIG 4: einen Knoten mit vier Ports und einer Datenbank; und
- FIG 5: das Netzwerk aus FIG 1, wobei der Port eines Knotens in einer Phase voll ist.

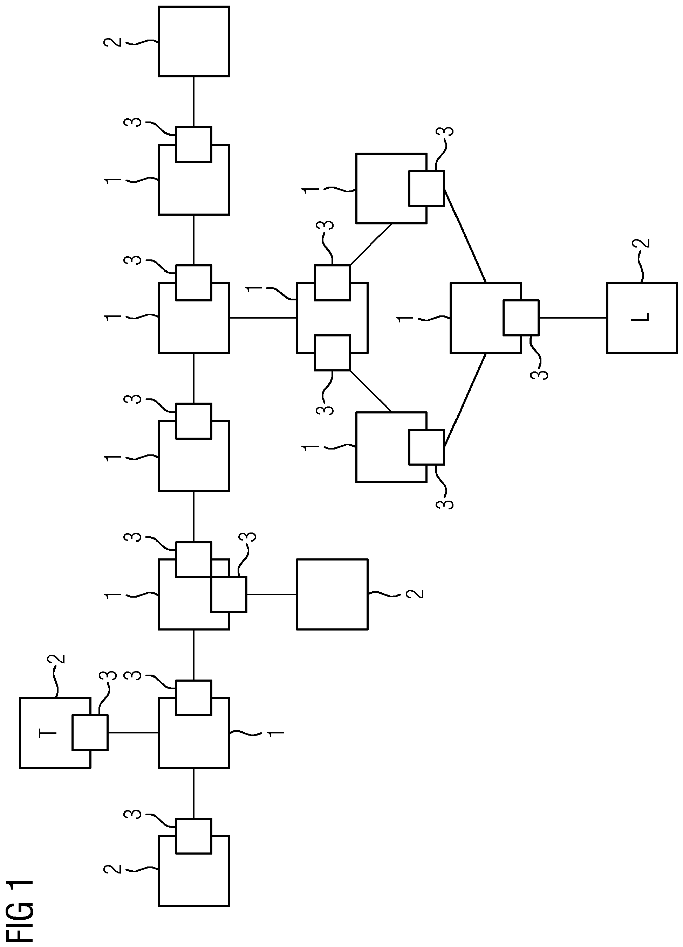

Die FIG 1 zeigt eine rein schematische Teildarstellung eines industriellen Ethernet-basierten Netzwerkes mit mehreren Netzwerkknoten 1, die bei dem dargestellten Ausführungsbeispiel in Form von Bridges gegeben sind. Neben insgesamt neun Netzwerknoten 1 sind fünf Kommunikationspartner in Form von Endgeräten 2 zu erkennen, von denen ein Kommunikationspartner T zyklisch Datenpakete (auch als Datenframes bezeichnet) an einen weiteren Kommunikationspartner L senden möchte. Der Kommunikationspartner T stellt entsprechend einen Sender dar und wird vorliegend auch als Talker bezeichnet. Der Kommunikationspartner L, der Empfänger der gesendeten Daten seien soll, wird im Weiteren als Listener bezeichnet. Ports 3 der Netzwerkknoten und der Kommunikationspartner 2 sind in der FIG 1 ebenfalls schematisch dargestellt.

Es sei angemerkt, dass das nur teilweise dargestellte Netzwerk eine Vielzahl weiterer Netzwerkknoten 1 umfassen kann oder umfasst, und weitere Kommunikationspartner 2 an dem Netzwerk teilnehmen können oder teilnehmen.

Bei dem hier beschriebenen Ausführungsbeispiel möchte der Talker T an den Listener L im Rahmen einer bzw. für eine Steuerungsanwendung für einen nicht weiter dargestellten industriellen technischen Prozess periodisch Datenframes in Echtzeit mit garantierter Dienstgüte, insbesondere garantierter maximaler Latenz senden. Es soll entsprechend ein TSN-Stream zwischen dem Talker T und Listener L eingerichtet werden.

Für die gesicherte Übertragung sind an den beteiligten Netzwerkknoten 1 Netzwerkressourcen, beispielsweise Bandbreite und/oder Filter-Data-Base-Einträge und/oder Queue-Speicher zu reservieren, sofern sie verfügbar sind. Die Einrichtung von Streams und zugehörige Reservierung beispielswiese unter Nutzung eines Reservierungsprotokolls ist aus dem Stand der Technik hinlänglich vorbekannt und wird vorliegend nicht näher erläutert. Rein beispielhaft sei in diesem Zusammenhang auf die Standards IEE802.1Q, IEE802.1AS, IEE802.1BA und IE-E802.1CB verweisen.

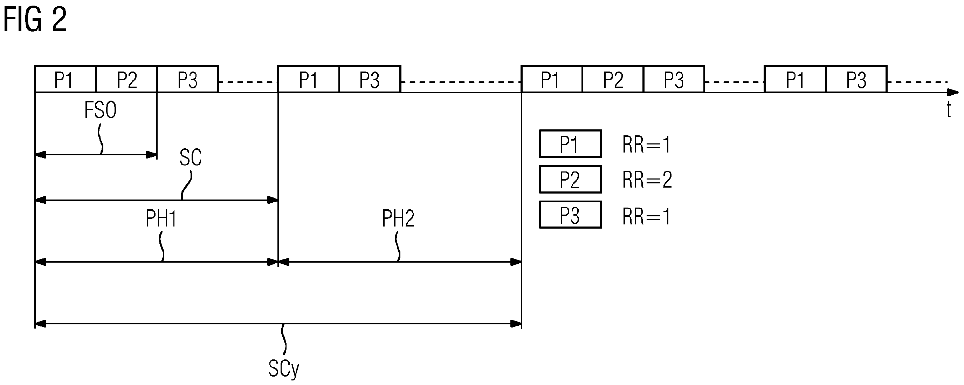

Die FIG 2 zeigt eine rein schematische Darstellung zur zyklischen Übertragung von Datenpaketen (auch als Datenframes bezeichnet), wie sie u.a. gemäß PROFINET IO vorgesehen ist. Konkret ist die Zeit für die Datenkommunikation in aufeinanderfolgende zyklische Zeitabschnitte gleicher Dauer, die sogenannten Sendetakte SC (im Englischen Send Clock) zerlegt, so dass die natürliche, kontinuierliche Zeit diskretisiert wird. Der Sendetakt bzw. die Sendetaktzeit wird üblicherweise im Rahmen der Konfiguration, insbesondere vom Benutzer definiert.

Insbesondere für den Fall, dass Pakete verschiedener Sender nicht mit der gleichen Rate generiert werden, kann eine Untersetzung (Reduction Ratio) konfiguriert sein bzw. werden. Die Untersetzung gibt an, wie oft die zyklischen IO-Nachrichten ausgetauscht werden. Es ist insbesondere das ganzzahlige Vielfache des Sendetaktes SC, das der (jeweilige) Sender für das Senden von Paketen nutzt. Eine Untersetzung/ Reduction Ratio RR von 1 bedeutet, dass IO-Nachrichten in jedem Sendetakt gesendet werden. Eine Reduction Ratio von 8 beispielswiese, dass nur alle 8 Sendetakte gesendet wird.

Zur Veranschaulichung unterschiedlicher Untersetzungen RR sind in der FIG 2 - rein beispielhaft - von drei verschiedenen Sendern stammende Datenpakete P1, P2, P3, die jeweils über eine geschützte Verbindung, konkret als TSN-Stream zu übertragen sind bzw. übertragen werden, dargestellt.

Von dem in FIG 1 dargestellten Talker T können beispielsweise die Pakete P1 zu senden sein bzw. gesendet werden. Die Pakete P2 und P3 mit Untersetzung beispielsweise von anderen der in FIG 1 Endgeräten 2 stammen und jeweils an andere Endgeräte 2 zu übertragen sein bzw. übertragen werden. Selbstverständlich ist es auch möglich, dass die Pakete P2, P3 von anderen, in der FIG 1 nicht erkennbaren weiteren Geräten stammen bzw. an solche zu übertragen sind.

Die Pakete P1 und P3 werden mit einer Untersetzung von 1 und die Pakete P2 mit einer Untersetzung von 2 zyklisch gesendet. Wie man sieht, werden entsprechend in jedem Sendetakt SC die Pakete P1 und P3 gesendet, die Pakete P2 jedoch nur in jedem zweiten Sendetakt SC.

Die Sendefrequenzen, also die Frequenzen, mit denen die Datenpakete P1, P2, P3 gesendet werden, unterscheiden sich mit anderen Worten. Konkret werden die Pakete P1 und P3 mit einer doppelt so hohen Frequenz gesendet, wie die Pakete P2. Die Untersetzungen von 1 bzw. 2 sind Größen, welche die Sendefrequenzen repräsentieren.

Jedes konfigurierte Endgerät 2, etwa IO-Gerät kann eine eigene Untersetzung, also eine eigene Reduction Ratio RR haben. Die von einem bestimmten IO-Gerät unterstützten Reduction Ratios sind zweckmäßiger Weise ebenfalls in einer Konfigurationsdatei aufgeführt. Es können beispielsweise Untersetzung zwischen 1 und 16.384 möglich sein.

Durch die Untersetzung ergeben sich je Sendezyklus SCy (ein Zyklus, in dem alle Sender einmal Daten generiert und gesendet haben) mehrere Sendetakte SC, die zum Senden genutzt werden können. Für eine Untersetzung von 2 beispielsweise können unter Einhaltung der Untersetzung "jeden zweiten Sendetakt" eines Zyklus, zwei mögliche Takte SC als Startpunkt verwendet werden. Diese werden üblicherweise als Phasen PH1, PH 2 bezeichnet und nummeriert. Jede Sendetaktzeit bzw. jede Sendetaktzeitspanne repräsentiert mit anderen Worten eine Phase. Für das Beispiel einer Untersetzung von 2 ergeben sich insgesamt zwei Phasen PH1, PH2 je Sendezyklus SCy. Werden diese durchnummeriert, erhält man entsprechende Phase 1 und Phase 2, was in FIG 2 dargestellt ist. Die Start-Phase der Pakete P2 mit der Untersetzung 2 ist, wie man in FIG 2 erkennt, die Phase 1, also PH1. Alternativ dazu könnte diese auch durch die Phase PH2 gegebene sein, dann würden in dieser jeweils alle drei Pakete gesendet.

Die Zeitdauer eines Sendetaktes/einer Phase kann aus dem Send Clock Factor (Sendetaktfaktor) berechnet werden. Der Wert kann üblicher Weise zwischen 1 und 128 liegen und definiert die Zeitspanne für einen Sendetakt und somit eine Phase im Zeitplan. Der Sendetaktfaktor ist diejenige Anzahl von in der Regel 31,25 Mikrosekunden (Basiszeiteinheit insbesondere für den PROFINET-Zeitplan) langen Schritten, die eine Phase bzw. einen Sendetakt bilden. Es gilt entsprechend PH = SCF x 31,25 Mikrosekunden bzw. SC = SCF x 31,25 Mikrosekunden mit der Phase PH bzw. dem Sendetakt (Send Clock) SC und dem Sendetaktfaktor (Send Clock Factor) SCF. Die von einem bestimmten IO-Gerät unterstützten Sendetaktfaktoren sind zweckmäßiger Weise in einer Konfigurationsdatei aufgeführt. Die PROFINET-Spezifikation verlangt in der Regel, dass alle Geräte einen Sendetaktfaktor von 32 unterstützen, was einem Sendetakt bzw. einer Sendetaktzeit von 1 Millisekunde entspricht (32 x 31,25 Mikrosekunden = 1 Millisekunde). Alle anderen Sendetaktfaktoren sind optional. Bei dem hier beschriebenen Beispiel beträgt die Dauer eines Sendetaktes SC 1 ms, der Sendetaktfaktor beträgt also 32.

Die Länge des Sendezyklus kann erhalten werden, indem das Produkt aus der maximalen Untersetzung RRₘₐₓ, dem Sendetaktfaktor SCF und der Basiszeiteinheit von 31,25 Mikrosekunden gebildet wird, also SZ = RRₘₐₓ x SCF x 31,25 Mikrosekunden. Für das Beispiel einer Untersetzung von 2 und einem Sendetaktfaktor von 32 ergibt sich ein Sendezyklus von 2 ms.

In der FIG 2 weiterhin - beispielshaft für das Paket P3 in der ersten Phase PH1 - eingezeichnet ist der sogenannte Frame Send Offset FSO. Dieser korrespondiert zu dem relativen Offset des Paketes P3 zu dem Startzeitpunkt desjenigen Sendetaktes SC, in welchem das Paket P3 übertragenwird. Der Frame Send Offset FSO wird in der Regel als Anzahl von 250ns-Schritten angegeben. Ein Frame Send Offset FSO kann zur weiteren Optimierung optional vorkonfiguriert werden.

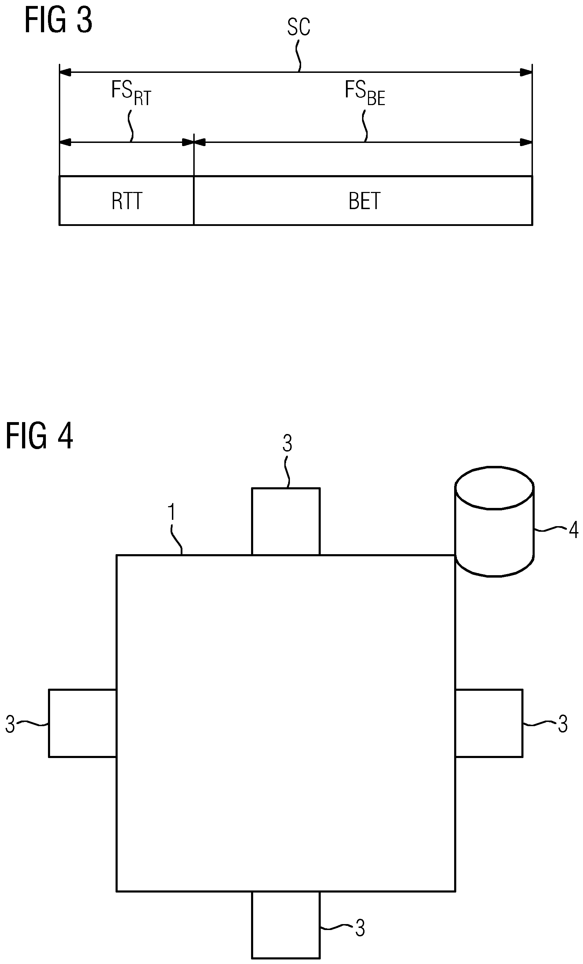

Es sei angemerkt, dass den Echtzeit-Datenpaketen P1, P2, P3 der geschützten Verbindungen, bzw. dem für diese vorgesehenen Anteil jedes Sendetaktes, jeweils in aus dem Stand der Technik vorbekannter Weise Pakete des Best-Effort-Datenverkehrs folgen. Dies ist rein schematisch in FIG 3 angedeutet, welche stark vereinfacht in Form eines Balkens den Echtdatenzeitverkehr (real time traffic) RTT, Best-Effort-Datenverkehr (best effort traffic) BET und - jeweils durch Pfeile darüber - den Füllstand FS_{RT} des Echtzeitdatenverkehrs RTT, den Füllstand FS_{BE} des Best-Effort-Datenverkehrs BET und den Sendetakt SC zeigt. Hier sind die Pfeile so gewählt, dass die beiden Bereiche des Sendetaktes "voll" sind.

Der Sendetakt (Send Clock) und die Untersetzung (Reduction Ratio) zusammen mit dem zeitrichtigen Einspeisen der Pakete durch die Geräte bilden praktisch das Herzstück des PROFINET Scheduling Modells. Während zeitrichtiges Einspeisen und Send Clock im IEEE 802.1 Q Modell enthalten sind, gilt dies für die Untersetzung/Reduction Ratio nicht. Daher lassen sich die existierenden Applikationen/Use-Cases nicht auf TSN abbilden, auch nicht bei höherer Link Speed, beispielsweise einem Übergang von den heute üblichen 100 Mbit/s zu lGbit/s oder höher.

Um dieser Problematik zu begegnen, sieht die vorliegende Erfindung vor, dass die Sendefrequenzen und/oder diese repräsentierenden Größen bei dem Finden eines Pfades für die Übertragung der Datenpakete wenigstens einer geschützten Verbindung berücksichtigt werden. Bevorzugt werden diese bei der Findung von Pfaden für sämtliche geschützten Verbindungen berücksichtigt.

Vorliegend werden die Untersetzungen, mit denen das Senden der Datenpakete P1, P2, P3 erfolgt, als die Sendefrequenzen repräsentierende Größen bei der Pfadfindung berücksichtigt. Sofern die Untersetzung nicht 1 ist, wird zusätzlich berücksichtigt, in welchem Sendetakt bzw. welcher Phase das Senden jeweils erfolgt. Vorliegen ist nur die Untersetzung der Pakete P2 ungleich 1, das bedeutet, es wird nur für diese zusätzlich berücksichtigt, dass das Senden in jedem Zyklus in der Phase 2 erfolgt. Mit anderen Worten wird die Nummer der Sendetakte/Phasen, in denen gesendet wird, berücksichtigt.

Konkret wird die Auslastung an den Ports 3 in Senderichtung zumindest derjenigen Netzwerkknoten 2, die an geschützten Verbindungen beteiligt sind, in den verschiedenen Sendetakten SC, insbesondere Phasen PH1, PH2 bei der Pfadfindung berücksichtigt.

Um dies zu ermöglichen, wird eine Datenbank geführt, in welcher Informationen über die Auslastung an den Ports 3 in Senderichtung zumindest derjenigen Netzwerkknoten 2, die an geschützten Verbindungen beteiligt sind, in den verschiedenen Sendetakten SC, insbesondere Phasen PH1, PH2 hinterlegt sind und/oder werden. Konkret weist jeder Netzwerkknoten einen Datenspeicher 4 auf, in die aktuelle Auslastung der Ports 3 gespeichert ist. Dies ist schematisch und beispielhaft für einen Netzwerkknoten 1 in der FIG 4 dargestellt.

Zumindest diejenigen Netzwerkknoten 1, die an geschützten Verbindungen beteiligt sind, machen die aktuelle Auslastung ihrer Ports 3 in Senderichtung in den verschiedenen Sendetakten SC, insbesondere Phasen PH1, PH2 wiederholt bekannt, insbesondere allen anderen Netzwerkknoten 1. Das Bekannt machen geschieht bei dem hier beschriebenen Ausführungsbeispiel durch Versenden von Nachrichten entsprechenden Inhaltes. Die Information zu der phasenabhängigen aktuellen Port-Auslastung wird vorliegend von den Netzwerkknoten 1 im Rahmen eines geeigneten Protokolls, beispielsweise Routing-Protokolls, konkret dem IS-IS-Protokoll ausgetauscht.

Alternativ oder zusätzlich zu einem solchen verteilten/dezentralen Modell kann auch eine Datenbank an zentraler Stelle geführt werden, was dann einem zentralen Modell bzw. einer zentralen Lösung entspricht.

Die Informationen über die Phasen-abhängige Portauslastung können auch Teil einer bereits vorhandenen IS-IS-Datenbank sein.

Für die verschiedenen Sendetakte SC, insbesondere Phasen PH1, PH2 wird jeweils ein Baum berechnet. Die Bäume umfassen dabei keine Pfade, für die gilt, dass wenigstens ein Port 3 wenigstens eines beteiligten Netzwerkknotens 1 in Senderichtung in den zu dem Baum gehörigen Sendetakten SC, insbesondere Phasen PH1, PH 2 um ein vorgegebenes Maß oder vollständig ausgelastet ist.

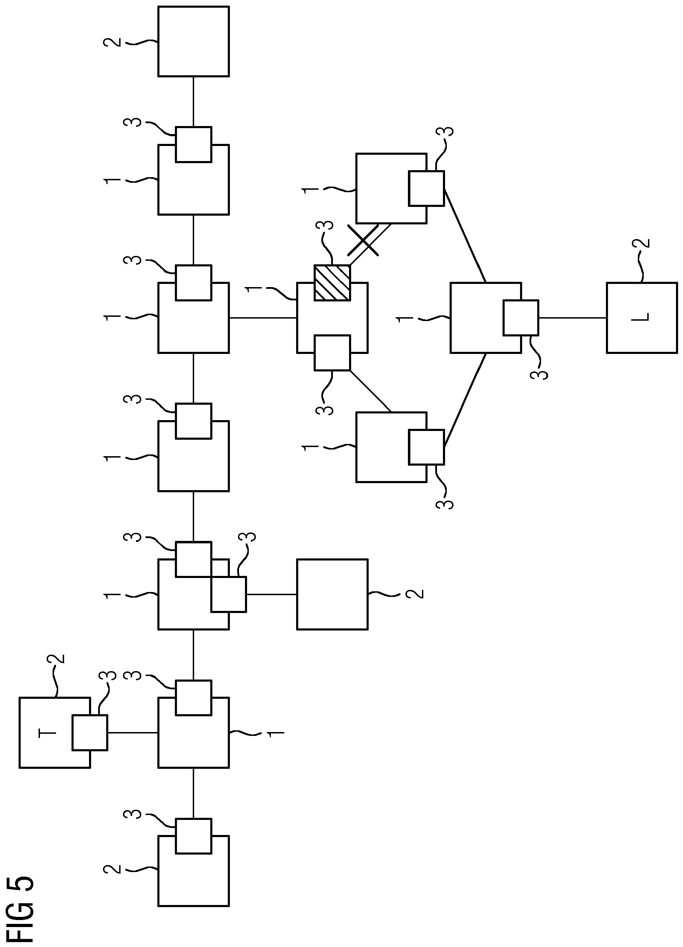

Dies ist wiederum rein schematisch und beispielhaft für einen resultierenden Baum in FIG 5 dargestellt. Diese zeigt das Netzwerk gemäß FIG 1, wobei gilt, dass der Port 3 in Senderichtung eines der Knoten 1 in Phase 1 bei Untersetzung 2 vollständig ausgelastet, also quasi "voll" ist. Der entsprechende Port 3 ist in FIG 5 schraffiert dargestellt und die Verbindung zum nächsten Knoten 1 ist durchgestrichen, um zu zeigen, dass der Pfad bzw. Weg über diesen Port 3 und diese Verbindung nicht mehr möglich ist.

Es gilt, dass für den Fall, dass ein Port 3 so ausgelastet ist, dass er keine weitere geschützte Verbindung, insbesondere keinen weiteren Stream mehr aufnehmen kann, nicht mehr Teil des Trees ist. Alle geschützten Verbindungen, insbesondere Streams aller Untersetzungen, die in einem Sendetakt SC gesendet werden, generieren die Auslastung. Durch das Updaten der Trees kann es vorkommen, dass es keine Trees für diese (bzw. eine bestimmte) Untersetzung mehr gibt. Dann findet insbesondere ein "Pfadefinder" keinen Pfad mehr und es kann keine weitere geschützte Verbindung, insbesondere kein weiterer Stream mehr etabliert werden.

Für diese Untersetzung und Phase ist dann ein Baum hinterlegt, der um diesen Pfad "beschnitten" ist. Es werden mit anderen Worten "bereinigte" bzw. "beschnittene" Trees für einzelne Sendetakte SC bzw. Phasen PH1, PH2 berechnet und herangezogen.

Bevorzugt wird jedes Mal, wenn ein Port für eine Phase wegen der Auslastung nicht mehr nutzbar ist, der zugehörige Baum/ Tree aktualisiert. Dann stehen immer aktuelle Bäume/Trees zur Verfügung.

Durch das Hinzukommen jeder weiteren geschützten Verbindung/jedes weiteren Streams kann es dazu kommen, dass ein Port in einer Phase voll ausgelastet ist bzw. wird. Das bedeutet, jede weitere geschützte Verbindung kann die Trees aktualisieren.

Für den Fall, dass es einen Port (oder auch mehrere Ports) gibt, über den (die) keine weitere geschützte Verbindung etabliert werden kann (können), kann es Listener/Talker geben, zwischen denen kein Pfad mehr etabliert werden kann.

Wird die Sendetakt- bzw. Phasenbelegung berücksichtigt, insbesondere in eine IS-IS-Datenbank mit aufgenommen und/oder mit allen beteiligten Netzwerkknoten ausgetauscht, kann mit Hilfe geeigneter Algorithmen, beispielsweise Dijkstra oder GADAG, für jede Untersetzung, sogar für jede Phase ein eigener Baum (Tree) generiert und auf Basis des Baumes ein Pfad gesucht und geprüft werden. Sobald ein Pfad für eine bestimmte Untersetzung benötigt wird, kann ein Pfadalgorithmus dann den dazugehörigen Tree verwenden.

Durch erfindungsgemäße Berücksichtigung der Sendefrequenzen bzw. diese repräsentierenden Größen, und die daraus resultierende Sendetakt- bzw. Phasenbelegung bei der Pfad-Findung kann mit deutlich mehr verfügbaren Pfaden und somit deutlich mehr geschützten Verbindungen, etwa TSN-Streams in einem Netzwerk gearbeitet werden, die Effizienz wird folglich deutlich erhöht. Damit lassen sich wesentlich mehr heute bekannte Anforderungen und Anwendungen auf AVB bzw. TSN abbilden.

Es sei angemerkt, dass die Netzwerkknoten 1 allesamt Ausführungsbeispiele erfindungsgemäßer Netzwerkknoten darstellen, die zur Durchführung des hier beschriebenen Ausführungsbeispiels des erfindungsgemäßen Verfahrens ausgebildet und eingerichtet sind.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Auch wenn beispielsweise in FIG 2 stark vereinfacht eine Situation mit Paketen von nur drei Sendern und Untersetzungen nur von 1 und 2 gezeigt ist, versteht es sich, dass Pakete von deutlich mehr Sendern über geschützte Verbindungen, insbesondere als TSN-Stream zu übertragen sein können, und/oder deutlich höhere Untersetzungen als 1 und 2 alternativ oder zusätzlich vorliegen können.

## Patentansprüche

1. Verfahren zur Datenkommunikation in einem insbesondere industriellen Netzwerk mit mehreren Netzwerkknoten (1), bei dem zwischen Kommunikationspartnern (2) über geschützte Verbindungen Datenpakete (P1-P3) zu übertragen sind, wobei die Datenpakete (P1-P3) von wenigstens zwei verschiedenen sendenden Kommunikationspartnern (2), Sendern, stammen und wobei sich von wenigstens zwei Sendern (2) die Sendefrequenzen, mit denen sie Datenpakete (P1-P3), die jeweils über eine geschützte Verbindung zu übertragen sind, senden, voneinander unterscheiden, **dadurch gekennzeichnet, dass** die Sendefrequenzen und/oder diese repräsentierenden Größen bei dem Finden eines Pfades für die Übertragung der Datenpakete (P1-P3) wenigstens einer geschützten Verbindung berücksichtigt werden.

2. Verfahren nach Anspruch 1, **dadurch gekennzeichnet, dass** die Zeit für die Datenkommunikation in aufeinanderfolgende zyklische Zeitabschnitte bevorzugt gleicher Dauer, Sendetakte (SC), zerlegt ist und/oder wird.

3. Verfahren nach Anspruch 2, **dadurch gekennzeichnet, dass** die Sendetakte (SC) durchnummeriert werden, wobei die Nummerierung insbesondere derart ist, dass mit eins begonnen und bis zu einer maximalen, insbesondere der maximale Untersetzung entsprechenden Nummer hochgezählt wird, und in einem nächsten Zyklus (SCy) für den dem Sendetakt (SC) höchster Nummer aus dem vorangegangenen Zyklus (SCy) folgenden Sendetakt (SC) jeweils wieder mit eins begonnen wird.

4. Verfahren nach Anspruch 2 oder 3, **dadurch gekennzeichnet, dass** diejenigen Sendetakte (SC), insbesondere diejenigen Phasen (PH1, PH2) bei der Pfadfindung berücksichtigt werden, in welchen die Datenpakete (P1-P3) zyklisch gesendet werden.

5. Verfahren nach Anspruch 3 und 4, **dadurch gekennzeichnet, dass** die Sendetakt-, insbesondere Phasen-Nummer berücksichtigt wird.

6. Verfahren nach einem der Ansprüche 2 bis 5, **dadurch gekennzeichnet, dass** die Auslastung an Ports (3) zumindest derjenigen Netzwerkknoten (1), die an geschützten Verbindungen beteiligt sind, in den verschiedenen Sendetakten (SC), insbesondere Phasen (OH1, PH2) bei der Pfadfindung berücksichtigt wird.

7. nach einem der Ansprüche 2 bis 6, **dadurch gekennzeichnet, dass** eine Datenbank (4) geführt wird, in welcher Informationen über die Auslastung an den Ports (3) in Senderichtung zumindest derjenigen Netzwerkknoten (1), die an geschützten Verbindungen beteiligt sind, in den verschiedenen Sendetakten (SC), insbesondere Phasen (PH1, PH2) hinterlegt sind und/oder werden.

8. Verfahren nach einem der Ansprüche 2 bis 7, **dadurch gekennzeichnet, dass** zumindest diejenigen Netzwerkknoten (1), die an geschützten Verbindungen beteiligt sind, die Auslastung wenigstens eines ihrer Ports (3) in Senderichtung in den verschiedenen Sendetakten (SC), insbesondere Phasen (OH1, PH2) bevorzugt wiederholt bekannt machen, insbesondere einem oder mehreren anderen Netzwerkknoten (1) und/oder durch Versenden von Nachrichten entsprechenden Inhaltes.

9. Verfahren nach Anspruch 8, **dadurch gekennzeichnet, dass** Nachrichten mit den Informationen über die Auslastung der Ports (3) in den verschiedenen Sendetakten (SC), insbesondere Phasen (PH1, PH2) im Rahmen eines Routing-Protokolls, bevorzugt im Rahmen des IS-IS-Protokolls ausgetauscht werden.

10. Verfahren nach einem der Ansprüche 2 bis 9, **dadurch gekennzeichnet, dass** für die verschiedenen Sendetakte (SC), insbesondere Phasen (PH1, PH2) jeweils ein Baum berechnet ist und/oder wird, wobei die Bäume bevorzugt keine Pfade umfassen, für die gilt, dass wenigstens ein Port (3) wenigstens eines beteiligten Netzwerkknotens (1) in Senderichtung in den zu dem Baum gehörigen Sendetakten (SC), insbesondere Phasen (PH1, PH2) um ein vorgegebenes Maß oder vollständig ausgelastet ist.

11. Verfahren nach einem der vorhergehenden Ansprüche, **dadurch gekennzeichnet, dass** die Sendefrequenzen (SC) oder die diese repräsentierenden Größen in Form von Untersetzungen (RR) gegeben sind und bei der Pfadfindung berücksichtigt werden.

12. Netzwerkknoten (1), der zur Durchführung des Verfahrens nach einem der vorhergehenden Ansprüche ausgebildet und/oder eingerichtet ist, wobei der Netzwerkknoten (1) insbesondere ausgebildet und/oder eingerichtet ist, um zumindest für diejenigen seiner Ports (3), über die Datenpakete (P1-P3) von eingerichteten geschützten Verbindungen weiterzuleiten sind, Informationen über die aufgrund eingerichteter geschützter Verbindungen bedingte Auslastung in verschiedenen Sendetakten (SC), insbesondere Phasen (PH1, PH2) bekannt zu machen.

13. Computerprogramm umfassend Programmcode-Mittel zur Durchführung des Verfahrens nach einem der Ansprüche 1 bis 11.

14. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 11 durchzuführen.
